(19) Europäisches Patentamt
European Patent Office
Office européen des brevets

(11) Publication number: 0 038 388 A1

# (12) EUROPEAN PATENT APPLICATION

(21) Application number: 80301232.7

(22) Date of filing: 17.04.80

(51) Int. Cl.$^3$: B 29 D 27/02

(43) Date of publication of application: 28.10.81 Bulletin 81/43

(84) Designated Contracting States: BE DE FR GB NL SE

(71) Applicant: Exxon Research and Engineering Company
P.O.Box 390 200 Park Avenue
Florham Park New Jersey 07932(US)

(72) Inventor: Khan, Azard Ackbar
43 Gorsey Square
Scarborough, M1B 1A6 Ontario(CA)

(74) Representative: Northover, Robert Frank
Esso Chemical Research Centre P.O. Box 1
Abingdon Oxfordshire, OX13 6BB(GB)

## (54) Foam dispensing nozzle and method and apparatus for transporting laminates comprising a foamable plastics material using a nozzle.

(57) A nozzle (9) for preparing laminates of a foamable polymeric material and a substrate, said nozzle (9) being stationary over a moving substrate and consisting of a housing having a plurality of tubular members (14) extending therefrom to deliver foamable material substantially across the width of the substrate transversely to the machine direction of the substrate.

EP 0 038 388 A1

./...

10
11
8
12
16
15
7
13
5
6
14
18
9
17

FIG. 1

0038388



TITLE
see front page

The present invention relates to improved delivery or nozzle means for delivering plastic foam material onto a moving substrate or platen, for example, the ejection of a phenolic foam material onto the platen for the manufacture of thermal insulation board.

In the preparation of foam materials, there is usually a mixing of components immediately prior to their use. For example, in the case of isocyanates, polyurethanes, polyols and other components may be mixed in a mixing head adjacent to the laydown nozzle, since the components react in a relatively short time, which makes imperative a rapid laydown before the reactive components can polymerize to a solid in or around the mixer and nozzle. Hence, it is desirable and commercially expedient to place the mixed material onto the substrate as quickly as possible. The same considerations exist for the phenolic foam where volatile liquids may be incorporated into the formulation for foaming. For example, U.S. Patent No.'s 3,694,387; 3,779,956 and 3,953,645 each describe phenolic resins which can be employed in the manufacture of heat-insulating board.

Thus, when dealing with such materials, rapid formulations and extrusion are essential. In the case of rigid foams, the mixing or creaming and laydown must occur before the plastic is crosslinked, in order to obtain the desired foam. There are a number of devices which achieve this result. Generally, the mixing head is a tubular housing with various internal arrangements of mixing or shearing baffles, wherein the foam ingredients enter generally at one end or along the mixing head, are intimately mixed, and are dispersed through a nozzle (opening) at the other end. One such mixing device is described in commonly owned U.S. Patent 4,032,115. A nozzle will generally have one opening; however, as in U.S. 4,032,115, there may be plurality of openings.

In practice, the combination mixing head and nozzle is mounted on a traversing means whereby it is moved transversely across the path of the platen or substrate, which is moving past the nozzle, thereby depositing a ribbon of foam material in a zig zag pattern onto the substrate. In plastic foaming processes, one normally essential requirement is to obtain an even distribution of density throughout the product. This contributes to consistent product quality within its own structure, thus allowing the amount of materials in the product and hence the corresponding raw material cost to be minimized.

With the conventional traversing head it is often difficult to achieve an even distribution. This results from the change of direction of the traversing head at each extremity of its transverse travel path, and more particularly from the alternately overlapping ribbons of foaming mixture, laid down by the traversing head not being able to uniformly cover the available area of the substrate. These overlapping ribbon sites are places where high energy reactions occur which in turn occasionally lead to the formation of horizontal shear lines resulting in a weakened foam product. The line speed of conventional systems is limited due to the extremely high traversing speeds necessary for uniform laydown coverage.

It is a feature of the present invention that the traversing nozzle has been eliminated, thereby providing a more uniform and economic product. It is a particular advantage of the present invention that foamed plastic material laminate board having low density variation is produced. Another advantage is the reduction in mechanical wear in the board-making apparatus by elimination of the traversing nozzle. Another feature of the present invention is the adjustability of the pattern of foam material deposited on the moving substrate to compensate for the vagaries of foaming characteristics at different points across the substrate. Another advantage is the elimination of the ribbon overlapping in the horizontal plane. These and other features and advantages will be apparent from the following description.

In the Drawings:

Figure 1 is a partial cross sectional view of one embodiment of the present invention attached to a mixing head.

Figure 2 is an enlarged cross sectional view of one tubular member illustrating its termination in a nozzle according to the present invention.

Figure 3 is a perspective view of an alternative embodiment of the present nozzle.

Figure 4 is a perspective view of a second alternative embodiment of the present nozzle.

Figure 5 is a schematic representation in perspective of the present nozzle in use, placing a continuous layer of foam material on a moving substrate.

Briefly, the present invention is a stationary foam material laydown nozzle having a housing and a plurality of elongated tubular members arrayed outwardly therefrom. The nozzle may be adapted to fit onto and be employed in combination with a foam material mixing head. The tubular members communicate with the mixing head or other foam material source and provide the conduits therefrom for the foam material.

Preferably the tubular members are arrayed along a center line of the nozzle, whereby they will lie transversely across the path of travel of the substrate in use. The length of the tubular members is preferably adjusted to provide that the entire width of the moving substrate is covered with foam material from the stationary nozzle.

The tubular members are flexible to some degree and allow adjustment of the position of the ensuing streams of mixed foam materials which form on the moving substrate. Thus, by selective adjustment of the tubular members, an even dispersal of the mixed materials may be achieved across the width of the substrate.

It has been found that maintaining all of the tubular members at the same length and diameter is a convenient and simple method of obtaining similar flow volumes through each. It may, however, be desirable to vary the length and diameter of the tubular members to obtain the desired foam material configuration on the moving substrate. Similarly, in some embodiments a dispersed array of tubular members may be employed to obtain the desired foam material flow and configuration. The array of tubular members may be adjusted to account for the many vagaries of the foaming art and to advantageously employ the feed characterization of the particular mixing head employed.

Another aspect of the present invention is a method of preparing a laminate of a foamed polymeric material and a substrate which comprises suspending a stationary foam material laydown nozzle over a moving substrate, said nozzle having means to deliver a foamable polymeric material over substantially the entire width of said moving substrate without movement of said nozzle, dispersing a foamable polymeric material through said means to deliver, whereby the foamable polymeric material falls onto the moving substrate, substantially across the width thereof and allowing the foamable material to foam. Preferably, the tubular members are arrayed in a substantially straight line transverse to the direction of movement (machine direction) of the substrate. Preferably the means for delivering the foam material over the width of the substrate comprises the elongated tubular members as described above.

In addition to the phenolic resins and polyurethanes discussed above many polymeric materials are produced as foams or are foamable, including polymers and copolymers of ethylene, propylene, vinyl acetate, butene, isobutene, butadiene; epoxy resin, silicone resin, styrene-butadiene copolymer, butadiene-styrene-acrylonitrile copolymer and the like. The substrate may be any material to which the foamed polymer will adhere to form the laminate, for example, paper, cloth, sheetrock, polymer films, glass, fiberglass, wood, and metal (steel, aluminum) and the like.

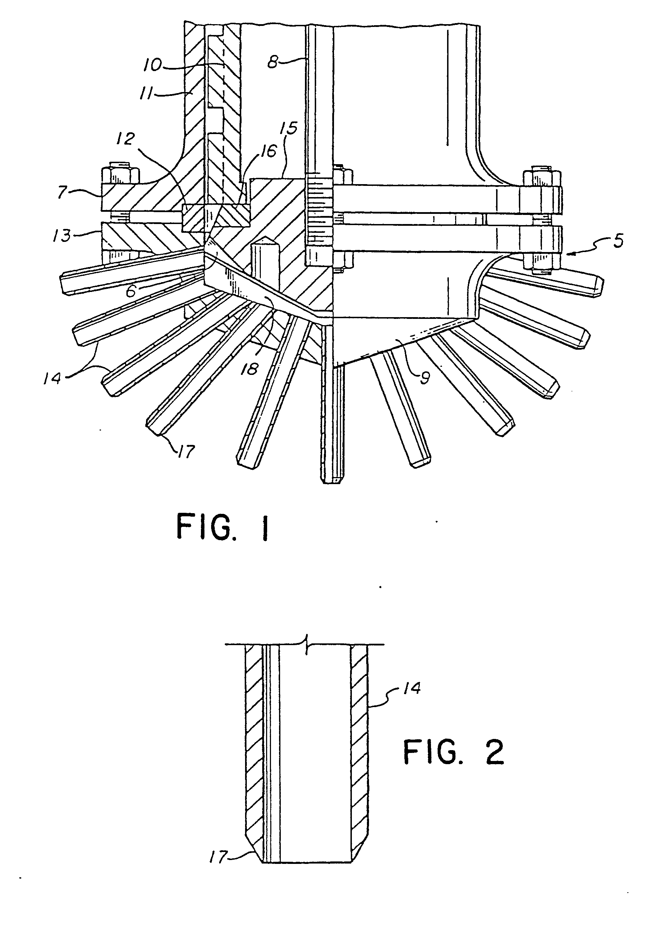

Referring to the drawings in detail, Figure 1 shows one embodiment of the present nozzle which comprises housing 9 through which extend a plurality of tubular members 14. In this embodiment, there are eleven tubular members arranged along a central plane through the housing 9.

Nozzle 5 is shown attached to the terminus of a mixhead such as that disclosed in U.S. Patent No. 4,032,115. The nozzle shown is particularly adapted internally to cooperate with the mixing head components of said patent apparatus. The nozzle is attached by threaded bolts (not shown) spaced about the annular flange 13 and extending through or into annular flange 7 of the mixing head 11. A suitable ring 12 is situated between the front end of the mixing head and the present nozzle.

The front end of the mixing head 11 adjacent to the connection with nozzle 9 is illustrated. Tubular members 14 open at both ends and passing through the front end of the mixing head are provided arranged in a plane which passes through a diameter of the nozzle. The foam ingredients enter the mixing head and travel therethrough to the nozzle and out through tubular members 14. At its front end, the rotary impeller means 10 includes a toothed nut 15. This toothed nut 15 is threaded into the opening at the front end of the impeller means 10 and is also formed with a central rearwardly directed recess, which receives the front end of the drive shaft means 8 which rotates the impeller, thereby mixing and forcing the foam materials through the mixing head and nozzle 5. Nut 15 is formed at its front outer peripheral region with a plurality of radially extending slits 6 which slits 6 define, between themselves, the teeth of nut 15. Between the front end of the impeller 10 and the nut 15 there is located a sealing ring 16, which has its periphery tapered as illustrated in Figure 1, so as to form a suitable transition region from the mixing head to the dispensing nozzle.

To accommodate this particular mixing head, the inner surface of the nozzle includes a radially extending groove 18 behind the tubular members 14. Thus, in this combination of prior art mixing head and the present nozzle, the groove, in cooperation with the teeth of the nut 15 provides a scouring action which serves to prevent undesirable buildup of any solidified or gelled material at the front of the mixing head.

Figure 2 shows a cross-sectional enlargement of the distal terminal end of one tubular member 14. Each tubular member preferably has the annularly bevelled surface 17 about the end thereof to reduce the surface area, thereby reducing polymer or gel build-up at that point.

Since the art of foaming polymeric materials is more complex than it appears, it is highly desirable that the tubular members be flexible or otherwise adjustable to obtain the best extrusion pattern for a specific foam. Flexibility of the tubing may be effected by using a flexible material such as copper tubing or it may be achieved by forming the tubing of interlocking rings, as known in the art, for example.

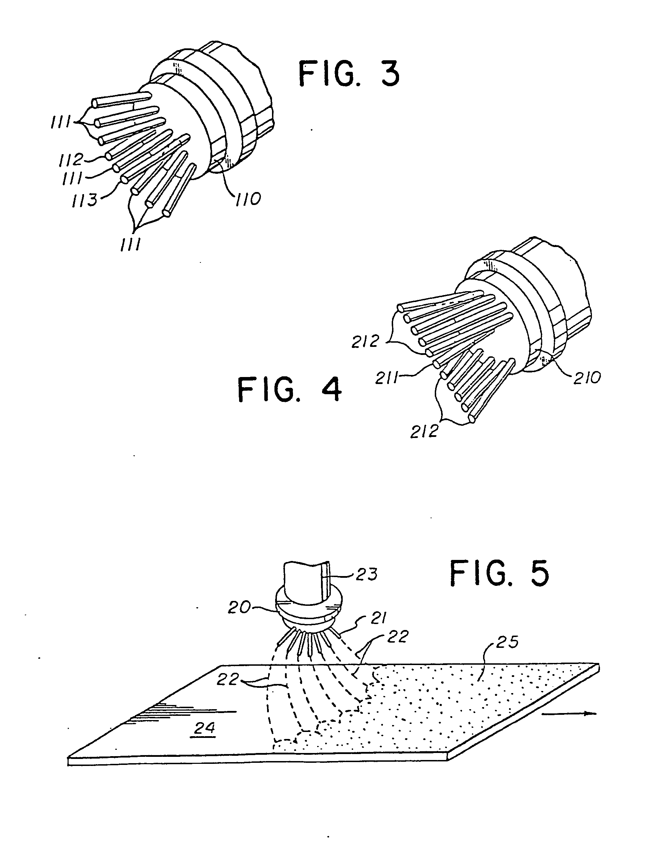

In Figures 3 and 4 the tubular members are arranged to receive foam material from other areas in the nozzle rather than just a central groove. For the scouring benefits as described above, additional radial grooves (not shown) or annular grooves (not shown) can be present on the internal surface of nozzles 110 (Figure 3) and 210 (Figure 4) respectively. Alternatively a space may be provided above the interior openings of the tubular members by eliminating contact of the nut with the internal nozzle. Quite obviously for other mixing heads than that disclosed in U.S. Patent No. 4,032,115 other routine mechanical adjustments will be required to match the present nozzle to the mixing head or chamber.

In particular regard to the embodiment of Figure 3 a configuration is shown where tubular members 111 lie on a central plane through the housing 110 with tubular members 112 and 113 being located on a plane perpendicular to the first plane. The terminal ends of the tubular members 111, 112 and 113 are shown arranged to lie on substantially straight lines (adjusted as noted above) to deliver a continuous film of foam material onto the moving substrate.

The embodiment of Figure 4 employs tubular members 212 extending from the periphery of housing 210 and a central tubular member 211, again having all of the ends of the tubular members substantially in a straight line or adjusted in an appropriate configuration to produce the best or desired foamed product.

In addition to the pattern of the foam material placed on the moving substrate, consideration must be given to variations in foaming characteristics at different points in the foam mass, e.g., the different conditions existing along the edge of the substrate and in the foaming mass in the middle thereof. Hence, although with some foam materials, and in some foam equipment, it may be desirable to have the same or substantially the same flow rate through each tubular member, in some combinations of materials and/or equipment, it will be desirable to have different flow rates. This can be easily achieved by adjusting the dimensions of the tubular members to obtain the desired rate of foam material flow.

Figure 5 shows the schematic operations of the present nozzle of the embodiment of Figure 1. A nozzle 20 having tubular members 21 is attached to mixing head 23, arranged in such a pattern that the streams of foaming material 22 are evenly distributed across the substrate 24, which is moving in the direction of the arrow in the figure. The foaming material 25 is shown on substrate 24. The nozzle 20 is fixedly mounted and may be attached directly to the mixing head or in some embodiments the

mixing head may be situated at a more distant location and is connected to the nozzle through a conduit.

In the configuration shown in Figure 5 the nozzle 20 has a generally conical cross-section with the tubular members 21 extending outwardly along an arc on the cone surface in the machine direction. In this embodiment, also, each tubular member is the same length. The dispensed foam material falls on the substrate in the pattern generally shown in Figure 5.

A specific run using a nozzle as depicted in Figure 1 with the nozzle fixedly mounted as shown in Figure 5 was carried at a line speed of 20 feet per minute with a substrate of single faced corrugated board, out to produce a 1-1/2 inch thick foamed phenolic resin board having a standard deviation in density of about 2.4% based on mean board weight.

WHAT WE CLAIM IS:

1. A foam material laydown nozzle having a housing, characterized in that it is stationary and has a plurality of tubular members passing through the front end of the housing and arranged outwardly therefrom.

2. A nozzle according to claim 1 characterized in that said tubular members are arrayed in a plane which passes through a diameter of said housing.

3. A nozzle according to claim 1 or 2 characterized in that each of said tubular members are of substantially the same length and diameter.

4. A nozzle according to claims 1-4 characterized in that said tubular members are flexible.

5. A nozzle according to claims 1-4 characterized in that the terminal end of each tubular member is bevelled thereabout.

6. A nozzle according to claims 1-5 characterized in that said housing has a conical configuration and said elongated tubular members are arranged on an arc on the surface of said housing.

7. A combination characterized by a mixing head directly attached to and in fluid communication with a nozzle according to claims 1-6 for delivery of a foamable material into said nozzle and hence therethrough through said tubular members.

8. A method of preparing a laminate of a foamed polymeric material and a substrate characterized by:

suspending a stationary foam material laydown nozzle over a moving substrate, said nozzle having means for delivering a foamable polymeric material over substantially the entire width of said moving substrate without movement of said nozzle,

dispensing a foamable polymeric material through said nozzle means, whereby said foamable polymeric material falls onto said moving substrate substantially across the width thereof, and

allowing said foamable polymeric material to foam on said substrate.

9. A method of preparing a laminate of a foamed polymeric material and a substrate according to claim 8, characterized in that said means for delivering a foamable polymeric material comprises a housing having a plurality of elongated tubular members.

10. A method of preparing a laminate of a foamed polymeric material and a substrate according to claims 8 or 9 wherein said tubular members are arrayed in a substantially straight line transverse to the direction of movement of said substrate.

11. Apparatus for preparing a laminate of a foamed material and a substrate characterized by a mixing head and nozzle combination according to claim 7 and means for passing a substrate beneath the nozzle.

10
8
11
12
15
16
7
13
5
6
14
18
9
17

FIG. 1

14
17

FIG. 2

FIG. 3
111
112
111
113
111
110
FIG. 4
212
211
210
212

FIG. 5
23
20
21
22
25
22
24

European Patent Office

# EUROPEAN SEARCH REPORT

0038388

Application number

EP 80 30 1232

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | GB - A - 1 038 313 (I.C.I.)<br>* Page 2, lines 17-84; figures 1-3 *<br>-- | 1,2,3,7,8,9,10,11 | B 29 D 27/02 |
| X | DE - A - 2 536 883 (ANDERSSON)<br>* Claim 3; figures 1-3 *<br>-- | 1,3,6,7,8,9,10,11 | |
| A | GB - A - 1 117 655 (VIKING ENGINEERING)<br>* Page 2, lines 39-56; 87-89; figure *<br>---- | 1 | |

TECHNICAL FIELDS SEARCHED (Int.Cl. 3)

B 29 D

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 08.08.1980 | SCHMIDL |

EPO Form 1503.1 06.78